# EUROPEAN PATENT APPLICATION

(11) **EP 4 844 217 A1**
(43) Date of publication of application: **25.11.2026**
(21) Application number: 26178364.1
(22) Date of filing: 12.05.2026
(51) Int. Cl.: F02C 7/277, F01D 15/10, F01D 19/00

(54) **SYSTEM FOR AIR TURBINE STARTER AND METHOD THEREOF**

(30) Priority: 21.05.2025 US 202519214890
(71) Applicant: Unison Industries, LLC, Jacksonville, FL 32256 (US)
(72) Inventor: BADDAM, Nagendra, Jacksonville, 32256 (US); O'MEARA, William Frank, Jacksonville, 32256 (US); MEYERS, Shiloh Montegomery, Jacksonville, 32256 (US); DRANSCHAK, David Allan, Jacksonville, 32256 (US)
(74) Representative: Openshaw & Co.

(57) **Abstract**

A system (86) has a hybrid turbine starter (HTS) (10) and a controller (88). The HTS (10) is used for a turbine engine (14). The HTS (10) has a housing (30), a turbine member (38), an electric machine (44), a first clutch (50), an output shaft (78), and a second clutch (72). The housing (30) defines an interior (31) and a primary air flow path (32). The turbine member (38) has a turbine shaft (40) and a plurality of blades (39). The electric machine (44) has an electric machine drive shaft (45). The first clutch (50) selectively couples the turbine shaft (40) to the electric machine drive shaft (45). The second clutch (72) selectively couples the turbine shaft (40) to the output shaft (78). The controller (88) is in communication with the electric machine (44), the first clutch (50), and the second clutch (72).

## Description

### TECHNICAL FIELD

The disclosure generally relates to starters for gas turbine engines, more specifically, hybrid turbine starters and related systems for gas turbine engines.

### BACKGROUND

A gas turbine engine, for example a gas turbine engine, is typically started via an air turbine starter (ATS). The ATS is often mounted near the gas turbine engine and the ATS can be coupled to a high-pressure fluid source, such as compressed air, which impinges upon a turbine rotor in the ATS causing the turbine rotor to rotate at a relatively high rate of speed. The ATS includes an output drive shaft that is driven by the turbine rotor, typically through a reducing gearbox, where the output drive shaft provides rotational energy to a rotatable element of the gas turbine engine (e.g., the crankshaft or the rotatable shaft) to begin rotating. The rotation by the ATS continues until the gas turbine engine attains a self-sustaining operating rotational speed.

### BRIEF DESCRIPTION OF THE DRAWINGS

In the drawings:
FIG. 1 is a schematic illustration of a gas turbine engine with a hybrid turbine starter, in accordance with various aspects described herein.
FIG. 2 is a cross-sectional view of the hybrid turbine starter of FIG. 1, in accordance with the various aspects described herein.
FIG. 3 is a schematic diagram of the hybrid turbine starter of FIG. 2 located within a system comprising a controller, in accordance with various aspects described herein.
FIG. 4 is a schematic cross-sectional view of the hybrid turbine starter of FIG. 1, further comprising a sprag clutch in a first position, in accordance with various aspects described herein.
FIG. 5 is a schematic cross-sectional view of the sprag clutch of FIG. 4, further illustrating the sprag clutch in a second position, in accordance with various aspects described herein.
FIG. 6 is a flowchart of a method for operating the hybrid turbine starter of FIG. 3, in accordance with various aspects described herein.
FIG. 7 is a flowchart of an exemplary method for operating the hybrid turbine starter of FIG. 3, in accordance with various aspects described herein.

### DETAILED DESCRIPTION

Aspects of this disclosure relate to a system comprising an air turbine starter. The air turbine starter is for a gas turbine engine. The air turbine starter includes a turbine. The turbine can be driven by pressurized air. The air turbine starter including the turbine and the electric machine is defined as a hybrid turbine starter (HTS). The HTS includes a first clutch, an output shaft, and a second clutch. The electric machine has an electric machine drive shaft. The first clutch selectively couples a turbine shaft of the turbine to the electric machine drive shaft. The output shaft selectively operably coupled to the gas turbine engine. The second clutch selectively couples the turbine shaft to the output shaft. The system comprises a controller in communication with the electric machine, the first clutch, and the second clutch. The HTS includes a controller. The controller is configured to catch the gas turbine engine during a coast down phase of the gas turbine engine.

During the coast down phase, the controller is configured to operably couple, via selective operation of the first clutch, the turbine shaft to the electric machine drive. During the coast down phase, the electric machine is operated at a first speed. As the gas turbine engine coasts down, the controller is configured to operably couple, via selective operation of the second clutch, the turbine shaft to the output shaft. The method of catching the turbine shaft via the first clutch and the second clutch is used to reduce the amount of time it takes to coast down the gas turbine engine without the use of additional hardware.

While in some examples the disclosure is described in connection with turbine engines for an aircraft, this disclosure is applicable to other non-aircraft applications or other turbine environments. Non-limiting examples of where this disclosure can be applied include other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms such as "first", "second", etc. may be used interchangeably to distinguish one component from another and are not intended to signify location or importance of the individual components.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

Additionally, as used herein, the terms "radial" or "radially" refer to a direction away from a common center. For example, in the overall context of a gas turbine engine, radial refers to a direction along a ray extending between a center longitudinal axis of the engine and an outer engine circumference. Furthermore, as used herein, the term "set" or a "set" of elements can be any number of elements, including only one.

Connection references (e.g., attached, coupled, secured, fastened, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

As used herein, a "controller" or "controller module" can include a component configured or adapted to provide instruction, control, operation, or any form of communication for operable components to effect the operation thereof. A controller or controller module can include any known processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), a hardware-accelerated logic controller (e.g. for encoding, decoding, transcoding, etc.), the like, or a combination thereof. Non-limiting examples of a controller or controller module can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller or controller module can also include a data storage component accessible by the processor, including memory, whether transient, volatile or non-transient, or non-volatile memory. Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein.

Also, as used herein, while a sensor can be described as "sensing" or "measuring" a respective value, sensing or measuring can include determining a value indicative of or related to the respective value, rather than directly sensing or measuring the value itself. The sensed or measured values can further be provided to additional components. For instance, the value can be provided to a controller or processor, and the controller or processor can perform processing on the value to determine a representative value or an electrical characteristic representative of said value.

Such a controller as described herein may also compare a first value with a second value and may operate or control operations of additional components based on the satisfaction of that comparison. As used herein, the term "satisfies" or "satisfaction" of a comparison between a first value and a second value will refer to a determination of whether the first value exceeds the second value, or does not exceed the second value, or is equal to the second value, such that the comparison is "true" when satisfied. In addition, as used herein, the term "satisfies" or "satisfaction" of a comparison between a first value and a value range refers to a determination that the first value is within the value range, such that the comparison is "true" when satisfied. It will be understood that such a determination may easily be altered to be satisfied by a positive/negative comparison or a true/false comparison. Example comparisons can include comparing a sensed or measured value to a threshold value, or to a threshold value range. For example, when a sensed, measured, or provided value is compared with another value or range, including a stored or predetermined value or range, the satisfaction of that comparison can result in actions, functions, or operations controllable by the controller.

Additionally, as used herein, elements being "electrically connected," "electrically coupled," or "in signal communication" can include an electric transmission or signal being sent, received, or communicated to or from such connected or coupled elements. Furthermore, such electrical connections or couplings can include a wired or wireless connection, or a combination thereof.

As used herein, "hybrid turbine starter (HTS)" refers to an air turbine starter having a turbine member selectively operably coupled to an electric machine. A housing, which can be several components coupled together, encases or surrounds at least a portion of the electric machine and the turbine member of the air turbine starter. The HTS can be a hybrid pneumatic electric starter (HyPES), where the turbine member is driven by pressurized air (pneumatically) or by electrical energy.

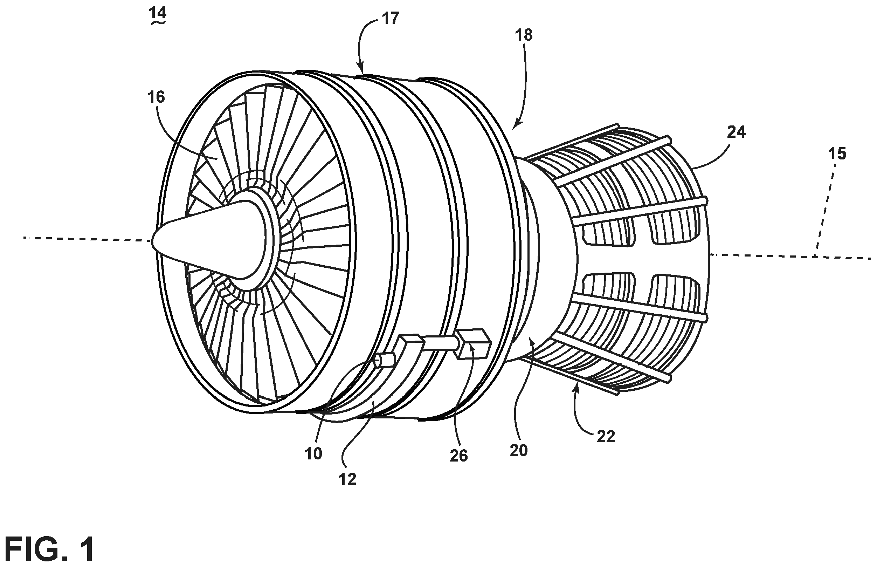

FIG. 1 is a schematic view of a gas turbine engine 14 having an air turbine starter (ATS) illustrated as the hybrid turbine starter 10 (HTS). The HTS 10 is coupled to an accessory gear box (AGB) 12, which are both schematically illustrated as being mounted to a gas turbine engine 14. The gas turbine engine 14 defines an engine centerline 15 extending in an axial direction.

The gas turbine engine 14 includes an air intake with a fan 16 that supplies air to a high-pressure compression section 18. While illustrated by way of example at a radially outer portion of a fan casing 17, it is contemplated that the HTS 10 can couple to any portion of the gas turbine engine 14. By way of non-limiting example, the HTS 10 can be located radially inward if the fan casing 17 and/or shifted in an axial direction.

The air intake with the fan 16 and the high-pressure compression section 18 collectively are known as the "cold section" of the gas turbine engine 14 upstream of the combustion. The high-pressure compression section 18 provides a combustion section 20 with high-pressure air. In the combustion section 20, the high-pressure air is mixed with fuel and combusted. Hot and pressurized combustion gases pass through a high-pressure turbine section 22 and a low-pressure turbine section 24 before exhausting from the gas turbine engine 14. As the combustion gases pass through the high-pressure turbine section 22 and the low-pressure turbine section 24, rotational energy is extracted from the flow of the gases passing through the gas turbine engine 14. A shaft can connect the high-pressure turbine region 22 to the high-pressure compression section 18 to power the compression mechanism. The low-pressure turbine section 24 can be coupled to the fan 16 of the air intake by way of a shaft to power the fan 16. That is, the gas turbine engine 14 includes an engine core having a compression section 18, combustion section 20, and turbine sections 22, 24 in serial flow arrangement, the engine core having an engine drive shaft.

The AGB 12 is coupled to the gas turbine engine 14 at either the high-pressure turbine region 22 or the low-pressure turbine region 24. The coupling between the AGB 12 and the gas turbine engine 14 can be, for example, by way of a mechanical power take-off 26. The mechanical power take-off 26 contains multiple gears and components for mechanical coupling of the AGB 12 to the gas turbine engine 14. Under normal operating conditions, the power take-off 26 translates power from the gas turbine engine 14 to the AGB 12 to power accessories of the aircraft for example but not limited to fuel pumps, electrical systems, and cabin environment controls. The HTS 10 can be mounted on the outside of either the air intake region containing the fan 16 or on the core near the high-pressure compression region 18.

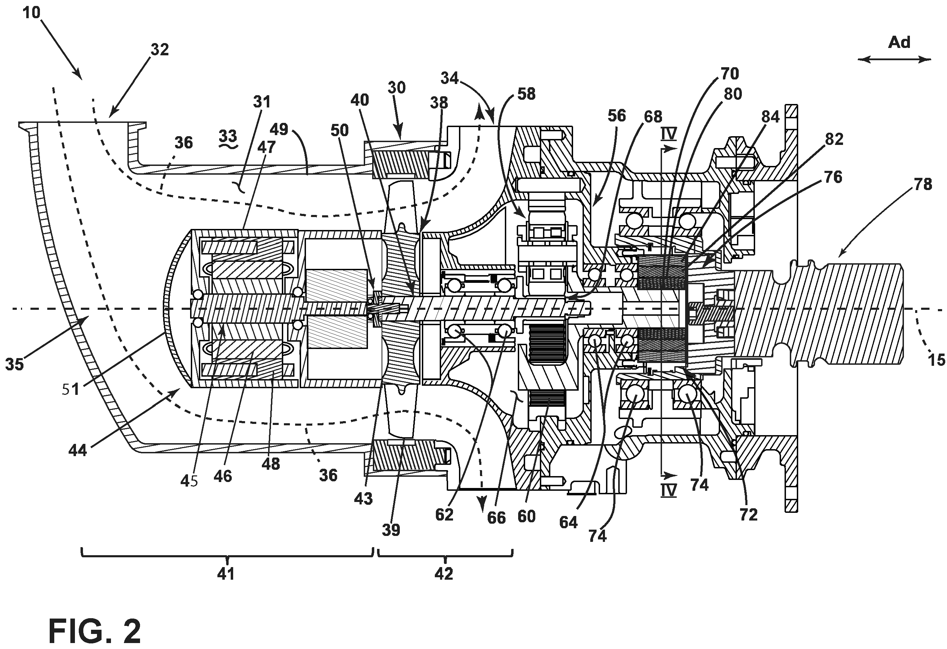

FIG. 2 is a schematic cross section of the HTS 10 of FIG. 1. The HTS 10 includes a housing 30 defining an interior 31 and an exterior 33. The housing 30 includes an inlet 32 and an outlet 34. A primary air flow path 36 extends between the inlet 32 and outlet 34 for communicating a flow of fluid therethrough. In one non-limiting example, the fluid is air, such as pressurized air that is provided from a pressurized air supply, including but not limited to, a ground-operating air cart, an auxiliary power unit, or a cross-bleed start from an engine already operating. The HTS 10 includes a turbine member 38 journaled within the housing 30. A plurality of blades 39 extend from and are circumferentially spaced about the turbine member 38. The plurality of blades 39 are disposed within the primary air flow path 36.

A turbine shaft 40 is coupled to the turbine member 38. The turbine shaft 40 can rotatably extract mechanical power from the flow of gas along the primary air flow path 36 via the plurality of blades 39, which thereby rotates the turbine shaft 40.

It is important to note that the HTS 10 is functionally and structurally different than the gas turbine engine 14 (FIG. 1). The HTS 10 is provided with a compressed air source to rotate the turbine member 38. The rotating of the turbine member 38 and turbine shaft 40 of the HTS 10 is used to start the gas turbine engine 14. Other than compressed air, the turbine member 38 can also be rotated by an electric machine 44 operably coupled and housed in the HTS 10 with the turbine shaft 40. The gas turbine engine 14 further distinguishes from the HTS 10 as the gas turbine engine 14 uses the Brayton cycle (or Joule cycle), which involves intake, compression, combustion, and exhaust. The operating environment, requirements, structure, and function of the HTS 10 and the gas turbine engine 14 differ significantly.

The primary air flow path 36 has at least a first portion 41 and a second portion 42. The first portion 41 is defined from the inlet 32 to an upstream face 43 of the turbine member 38. The second portion 42 is defined from the upstream face 43 of the turbine member 38 to the outlet 34.

An electric machine 44 is located within the housing 30. It is contemplated that the electric machine 44 can be located outside of the housing within another portion of the gas turbine engine 14. The electric machine 44 is axially forward of the turbine member 38. That is, the turbine member 38 is axially aft of the electric machine 44. As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream. The term "axially" refers to an axial direction Ad along the engine centerline 15.

The electric machine 44 can include an electric machine drive shaft 45. The electric machine drive shaft 45 is axially spaced from the turbine shaft 40. The electric machine 44 can include a rotor 46 rotatably connected with the electric machine drive shaft 45 and configured to rotate relative to a stationary (i.e., non-rotating) stator 48. By way of non-limiting example, the rotor 46 can be an inner rotor. An outer surface 47 circumscribes the electric machine 44. The outer surface 47 of the electric machine 44 is spaced from an inner surface 49 of the housing 30. The outer surface 47 defines at least a portion of the primary air flow path 36. In a non-limiting example, the HTS 10 includes a dome wall 51 in the interior 31 of the housing 30. The dome wall 51 can guide air from the inlet 32 to the turbine member 38 by defining at least a portion of a primary air flow path 36. That is, the dome wall 51 can create a smooth flow path around the electric machine 44. It is contemplated in another non-limiting example, the dome wall 51 can be included on the electric machine 44. Alternatively, the dome wall 51 can be removed from the HTS 10.

The electric machine 44 can be provided with electrical energy, resulting in the rotation of the rotor 46 and the electric machine drive shaft 45. The electric machine 44 can receive electrical energy, for example, from a power distribution system or an electrical storage device (e.g., battery). Optionally, electrical energy (e.g., electricity, current, voltage, power, or the like) can be supplied from the HTS 10 to another component, such as the power distribution system, electrical storage device, or an electrical load. That is, the electric machine drive shaft 45 can be adapted or operable to receive a rotatable kinetic input or supply or provide a rotatable kinetic output.

A first clutch 50 is located in the interior 31. The first clutch 50 selectively couples the turbine shaft 40 to the electric machine drive shaft 45. The first clutch 50 can be mounted to the electric machine drive shaft 45. It is contemplated that the first clutch 50 is axially located between the electric machine 44 and the turbine member 38. However, the first clutch 50 can axially overlap or be located radially outward of the electric machine 44 and the turbine member 38. It is further contemplated that the first clutch 50 can be included in the electric machine 44. It is yet further contemplated that portions of the electric machine 44 are included in the first clutch 50. The first clutch 50 can be, for example, an electromagnetic clutch. That is, electrical energy is provided to a portion of the electromagnetic clutch to engage the first clutch 50. Alternatively, the first clutch 50 can be a sprag clutch or a mechanically actuated clutch controlled by an active signal, speed, or torque control.

A gear train 58 can be located within a gear box 56 and drivingly coupled with the turbine member 38. In the illustrated example, the gear train 58 includes a ring gear 60. It will be understood that the gear train 58 can include any suitable gear assembly including, but not limited to, a planetary gear assembly, a pinion gear assembly, or the like. The turbine shaft 40 couples the gear train 58 to the plurality of blades 39 allowing for the transfer of mechanical power to the gear train 58. The turbine shaft 40 is coupled to the gear train 58 and rotatably supported by a pair of turbine bearings 62. The gear train 58 is supported by a pair of carrier bearings 64.

A gear box interior 66 can be provided for containing a lubricant, including, but not limited to, grease or oil. The gear box interior 66 can provide lubrication and cooling to mechanical parts contained therein, such as the gear train 58, ring gear 60, turbine bearings 62, carrier bearings 64, or the like.

An aperture 68 is provided in the gear box interior 66. The turbine shaft 40 can extend through the aperture 68 and mesh with a carrier shaft 70 to which a second clutch 72 is mounted and supported by a pair of spaced bearings 74 in the interior 31. In the non-limiting example shown, the second clutch 72 is a sprag clutch. A drive shaft 76 extends from the gear box 56 and is coupled to the second clutch and additionally supported by the pair of spaced bearings 74. The drive shaft 76 is driven by the gear train 58 and selectively couples to an output shaft 78 such that during a starting operation, the drive shaft 76 provides a driving motion to the output shaft 78 and during a coast down phase, the output shaft 78 provides slowing motion to the output shaft 78. That is, the second clutch 72 selectively couples the turbine shaft 40 to the output shaft 78. The turbine shaft 40 and the output shaft 78 are axially spaced.

An inner hub 80 of the second clutch 72 is coupled to the turbine shaft 40. An outer hub 84 of the second clutch 72 is coupled to the output shaft 78. Therebetween, the inner hub 80 and the outer hub 84 is a sprag section 82. The sprag section 82 can include, for example, a plurality of sprags. Sprags within the sprag section 82 are configured to selectively couple the inner hub 80 and the outer hub 84. It is contemplated that while the second clutch 72 is shown as a sprag clutch, other clutches are contemplated, such as but not limited to, an electromagnetic clutch, or a pawl clutch.

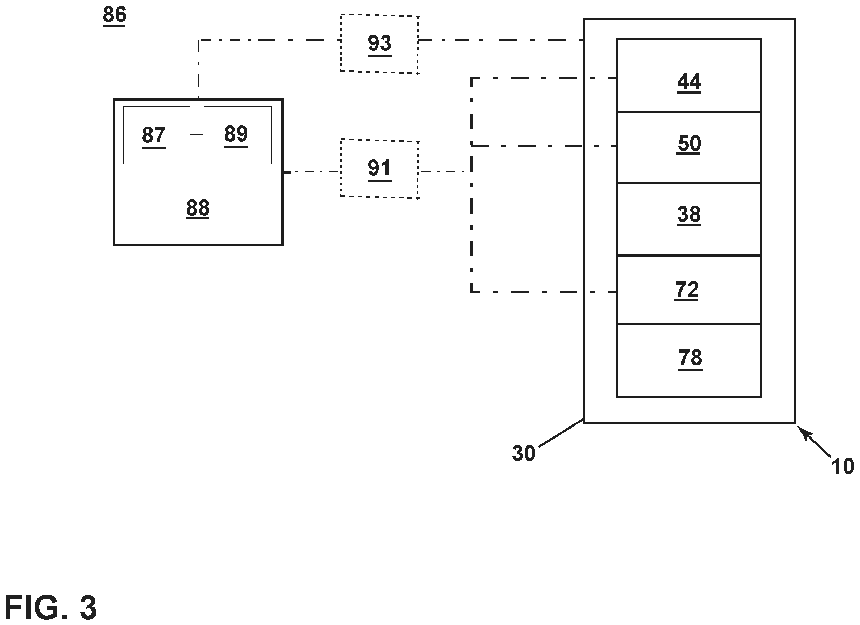

FIG. 3 is a schematic diagram illustrating a system 86 including the HTS 10 of FIG. 2. The HTS 10 includes the electric machine 44, the first clutch 50, the second clutch 72, the turbine member 38, and the output shaft 78. The system 86 comprises a controller 88.

The controller 88 comprises a processor 87 and a memory 89. The memory 89 includes a set of executable commands or runtime instructions. The processor 87 is configured to execute the executable commands or otherwise provide the runtime instructions to other portions of the HTS 10 or gas turbine engine 14 (FIG. 1). The controller 88 can be configured to automatically control the operation of the HTS 10. As a non-limiting example, the controller 88 is communicatively coupled to and configured to automatically control the operation of at least one of the electric machine 44, the first clutch 50, the second clutch 72, or a combination thereof. The dot-dash lines shown between the controller 88, the electric machine 44, the first clutch 50, and the second clutch 72 represent the electrical connection thereof.

The controller 88 is in communication with the HTS 10. As a non-limiting example, the controller 88 is communicatively coupled to at least one of the electric machine 44, the first clutch 50, the second clutch 72, or a combination thereof. As a non-limiting example, the controller 88 can control or otherwise selectively supply an electrical energy to the electric machine 44. Put another way, the controller 88 can actuate a mechanism (e.g., a switch) to electrically couple a power source 91 (e.g., a battery) to the electric machine 44 to supply the electrical energy to the electric machine 44. The controller 88 can control the first clutch 50 to selectively couple or uncouple the electric machine drive shaft 45 (FIG. 2) from the turbine shaft 40 (FIG. 2).

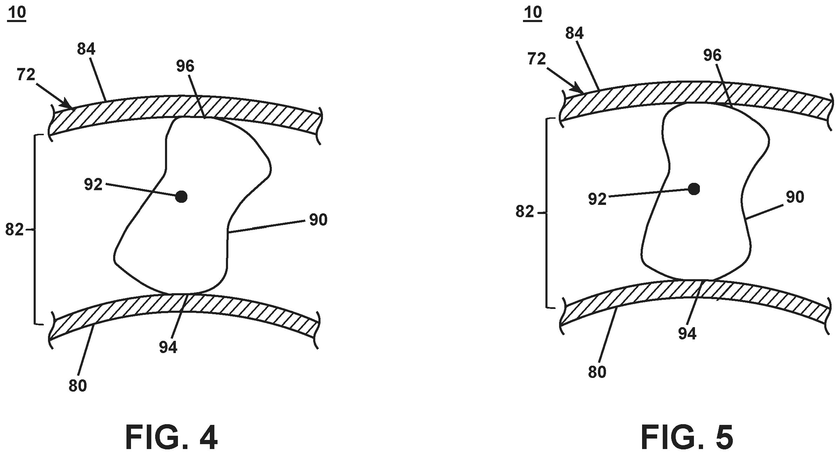

During a coast down phase of the gas turbine engine 14 (FIG. 1), the controller 88 operably couples the electric machine 44 to the turbine member 38 by engaging the first clutch 50. The controller 88 operably couples the turbine member 38 to the output shaft 78 by engaging the second clutch 72. Further description related to the second clutch is described in FIGs. 4-5.

It will be appreciated that the controller 88 can be coupled to other portions of the HTS 10 or the gas turbine engine 14. As a non-limiting example, the controller 88 can be coupled to a sensor 93 within the gas turbine engine 14 that determines a torque of one or more rotating components of the gas turbine engine 14. During shutdown or otherwise during coast down, the controller 88 can read the sensor 93 and automatically control the electric machine 44 to provide the needed torque to the output shaft 78 to create the smooth, steady decrease in rotational velocity.

FIG. 4 is a schematic cross-sectional view of the HTS 10 as seen from sectional line IV-IV of FIG. 2. The HTS 10 includes the second clutch 72. The second clutch 72 includes the sprag 90 within the sprag section 82. The sprag 90 has a first end 94 and a second end 96. The sprag 90 is pivotable about a pivot point 92. While illustrated as the second clutch 72, it is contemplated that the description herein can also be applied to the first clutch 50. The HTS 10 includes the inner hub 80 and the outer hub 84. The first end 94 of the sprag 90 selectively contacts the inner hub 80. The second end 96 of the sprag 90 selectively contacts the outer hub 84. The sprag 90, as illustrated, is in a first position.

FIG. 5 is a schematic cross-sectional view of the HTS 10 as seen from sectional line IV-IV of FIG. 2. The HTS 10 includes the second clutch 72. The second clutch 72 includes the sprag 90 within the sprag section 82. The sprag 90 has a first end 94 and a second end 96. The sprag 90 is pivotable about a pivot point 92. The HTS 10 includes the inner hub 80 and the outer hub 84. The first end 94 of the sprag 90 selectively contacts the inner hub 80. The second end 96 of the sprag 90 selectively contacts the outer hub 84. The sprag 90, as illustrated, is in a second position.

With reference to FIGs. 4 and 5, the sprag 90 as illustrated is a double-ellipsoid in shape, however, any suitable shape is contemplated. While one sprag 90 is shown, a plurality of sprags are contemplated. The sprag 90 is selectively pivotable about the pivot point 92.

The sprag 90 is configured to pivot to engage the second clutch 72. In a non-limiting example, when the second clutch 72 is in the first position (FIG. 4), the sprag 90 is configured to apply a drag force on at least one of the inner or outer hubs 80, 84. That is, in the first position the second clutch 72 slips. In the second position (FIG. 5), the sprag 90 is engaged with the inner and the outer hubs 80, 84 to couple the turbine shaft 40 to the output shaft 78 (FIG. 2). That is, when the sprag 90 couples the inner hub 80 to the outer hub 84, the inner hub 80 and the outer hub 84 rotate at the same speed.

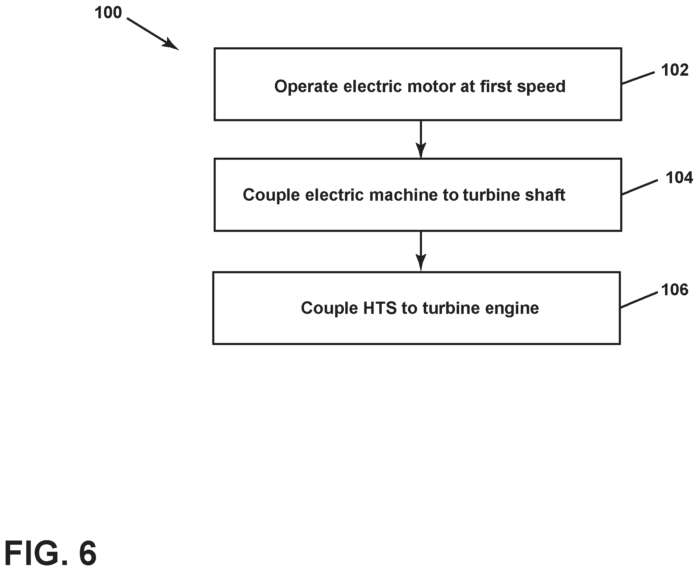

FIG. 6 is a flowchart of a method 100 for operating the gas turbine engine 14 (FIG. 1), with the HTS 10 (FIG. 1) during a coast down phase of the gas turbine engine 14. The method 100 includes operating the electric machine 44 (FIG. 2) to cause the electric machine drive shaft 45 to rotate at a first speed, at 102. The first speed is slow enough such that the gas turbine engine 14 can operate dry rotations. That is, dry rotation of the gas turbine engine 14 includes rotating the output shaft 78 without the introduction of a fuel or ignition. It will be appreciated that the electric machine 44 is operated at the first speed during the coast down phase of the gas turbine engine 14. The first speed of the electric machine 44 is, for example, greater than or equal to 350 (rpm) and less than or equal to 470 (rpm).

The electric machine 44 is coupled to the turbine shaft 40 (FIG. 2), at 104. Specifically, the electric machine 44 is coupled to the turbine shaft 40, at 104, through engagement of the first clutch 50 (FIG. 2). The coupling of the electric machine 44 to the turbine shaft 40 causes the turbine shaft 40 to rotate with the electric machine drive shaft 45. Put another way, the electric machine 44 is coupled to the turbine shaft 40, at 104, to transfer a torque from the electric machine drive shaft 45 to the turbine shaft 40.

The HTS 10 is coupled to the gas turbine engine 14, at 106. Specifically, the turbine shaft 40 is coupled to the output shaft 78, at 106, through engagement of the second clutch 72 (FIG. 2). It will be appreciated that the output shaft 78 is coupled to one or more portions of the gas turbine engine 14. The coupling of the turbine shaft 40 to the output shaft 78 causes the output shaft 78 to rotate with the turbine shaft 40. Put another way, the turbine shaft 40 is coupled to the output shaft 78, at 106, to transfer a torque from the turbine shaft 40 to the output shaft 78.

It will be appreciated that the method 100 can be performed automatically through use of the controller 88 (FIG. 3). The controller 88 can automatically selectively couple the electric machine 44 to a power source 91 (FIG. 3)(e.g., the controller 88 can selectively supply the electrical energy to the electric machine 44) to enable the electric machine 44 to operate at the first speed, at 102. It will be appreciated that the controller 88 can include in the memory 89 (FIG. 3) a relationship between the electrical energy supplied to the electric machine 44 and the speed that the electrical energy causes the electric machine drive shaft 45 to rotate at. Put another way, the controller 88, through use of the memory 89, can determine the value needed for the electrical energy to cause the electric machine drive shaft 45 (FIG. 2) to rotate at the first speed. The processor 87 (FIG. 3) can then send an instruction to the power source 91 to supply the needed amount of electrical energy to the electric machine 44 (FIG. 2) to cause the electric machine drive shaft 45 to rotate at the first speed.

The controller 88 can automatically selectively actuate or otherwise operate the first clutch 50, at 104, to transfer torque from the electric machine drive shaft 45 to the turbine shaft 40. Specifically, the processor 87 of the controller 88 can send a command to the first clutch 50 to close or otherwise engage in order to enable the coupling between the electric machine 44 and the turbine shaft 40, at 104.

The controller 88 can automatically selectively couple the HTS 10 to the gas turbine engine 14, at 106, through an automatic selective operation of the second clutch 72. Operating the second clutch 72 can include, but is not limited to, the controller 88 sending an instruction to the sprag 90 within the sprag section 82 to pivot at the pivot point 92 from the first position (FIG. 4) to the second position (FIG. 5). Once in the second position, the sprag 90 couples the inner hub 80 to the outer hub 84. That is, the turbine shaft 40 coupled to the inner hub 80 is coupled to the outer hub 84. The outer hub 84 is coupled to the output shaft 78. The electric machine 44 continues the coast down phase by rotating the output shaft 78 at a predetermined speed. Put another way, the process of coasting down the gas turbine engine 14 includes operating the electric machine 44 to rotate the electric machine drive shaft 45, turbine member 38, and the inner hub 80 of the second clutch 72 at the first speed via engagement of the first clutch 50. Rotating the inner hub 80 at the first speed creates slippage in second clutch 72 slowing the output shaft 80 of the gas turbine engine 14. The gas turbine engine 10 is hen caught while it is coasting down via automatic engagement of second clutch 72 at the predetermined speed.

By catching the gas turbine engine 14 with the first and second clutch 50, 72 the coast down time of the coast down phase is reduced. Alternatively, the first and second clutch 50, 72 can be speed actuated instead of activated by the controller 88. Put another way, the first clutch 50 and the second clutch 72 engage or disengage based on a speed difference between the inner hub 80 and the outer hub 84.

While the phrases "through use of" or "via" the controller 88 are used, it will be appreciated that the automatic performance of various portions of the method(s) described herein through use of the controller 88 are done through use of one or more components of the controller 88 such as the processor 87 (FIG. 3), the memory 89 (FIG. 3), or a combination thereof. For example, the automatic selectively actuation or otherwise operations of the first clutch 50, at 104, to transfer to torque from the electric machine drive shaft 45 to the turbine shaft 40 can further include the processor 87 accessing a set of runtime instructions/executable command saved on the memory 89 related to the selective operation of the first clutch 50. The processor 87 can then send the runtime instructions/executable command to the first clutch 50 to instruct or otherwise command the first clutch to operate according to the runtime instructions/executable command.

It will be understood that the method 100 is flexible. For example, the sequence of steps depicted is for illustrative purposes only, and is not meant to limit the method 100 in any way, as it is understood that the steps can proceed in a different logical order or additional or intervening steps can be included without detracting from embodiments of the invention. As a non-limiting example, at least a portion of the method 100 can occur in tandem with or offset from one another.

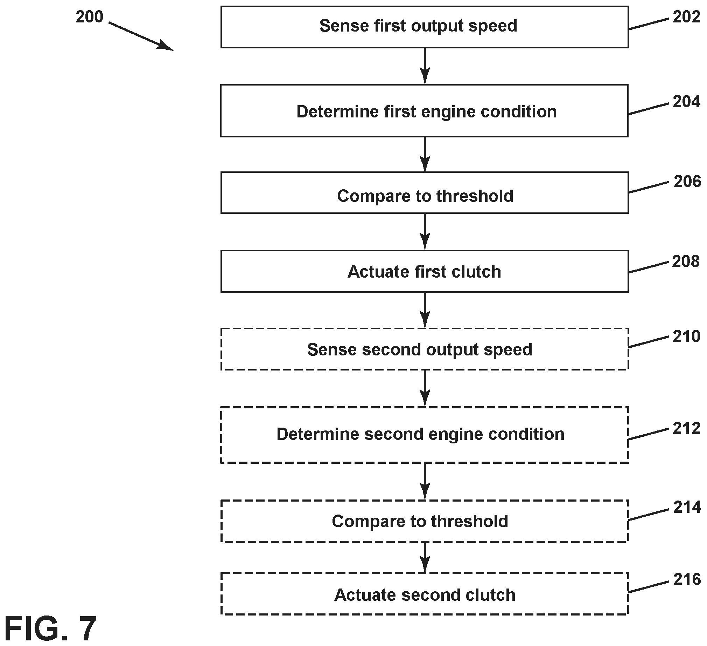

FIG. 7 is a flowchart of a method 200 for operating a gas turbine engine 14 (FIG. 1). At least a first output shaft speed of the output shaft 78 is sensed, at 202. In a non-limiting example, the speed of the output shaft is measured by the sensor 93 (FIG. 3) in communication with the controller 88. The sensor 93 can be a separate component from controller 88, alternatively, the sensor 93 can be integrated within the controller 88.

The controller 88 determines a first engine condition, at 204. Specifically, the controller 88 receives and subsequently uses the first output shaft speed to determine the first engine condition, at 204. The first engine condition can include a single output shaft speed, an output shaft speed change such as a speed increase or a speed decrease, a specific output shaft speed rate of change, or any combination thereof.

The controller 88 compares the first engine condition with at least a first output shaft speed threshold, at 206. As a non-limiting example, the output shaft speed threshold can be a singular data point (e.g., a singular speed of the output shaft 78) or a range of data points (e.g., a range of speeds of the output shaft 78). The output shaft speed threshold value(s) are accessible to the controller 88. Specifically, the output shaft speed threshold value(s) can be saved to the memory 89 (FIG. 3) or another memory accessible by the controller 88 (e.g., a cloud-based memory).

If it is determined, via the comparing at 206, that the first engine condition satisfies the first output shaft speed threshold, the controller 88 actuates the first clutch 50, at 208. As used herein, the term "satisfy", "satisfies", or iterations thereof refers to the meeting of, exceeding of, or falling within a range defined by the output shaft speed threshold. When the first engine condition is satisfied by the output shaft speed threshold (e.g., when the controller 88 determines that the output shaft speed threshold is met), the controller 88 actuates the first clutch 50 to couple the electric machine 44 to the turbine member 38. It will be appreciated that the first engine condition is indicative of the coast down phase of the gas turbine engine 14.

When the first clutch 50 is selectively actuated or engaged, at 208, the sprags 90 apply a drag force on the outer hub 84, slowing the outer hub 84 and consequently the output shaft 78. The slowing of the output shaft 78 defines the coast down phase of the gas turbine engine 14. Alternatively or additionally, the output shaft 78 can be slowed down by an additional component such as a brake. As the speed of the output shaft 78 approaches the first speed of the electric machine drive shaft 45, the system 86 works to further coast down the output shaft 78 by the drag force applied on at least one of the inner or outer hubs 80, 84 by the sprag 90. In a non-limiting example, the system 86 can let the output shaft 78 of the gas turbine engine 14 coast down on its own, coast down the output shaft 78 with the drag force of the second clutch 72, or a combination thereof.

It will be appreciated that in the coast down phase, the electric machine 44 is operated by the controller 88 such that the electric machine drive shaft 45 rotates at the first speed. The first speed is less than the first output shaft speed of the output shaft. By way of a non-limiting example, the first clutch 50 can couple the electric machine 44 to the turbine member 38 prior to the rotation of the electric machine 44 at the first speed.

A second output shaft speed of the output shaft 78 is sensed, at 210. In a non-limiting example, the second output shaft speed is measured by the sensor 93 in communication with the controller 88 after sensing of the first output shaft speed. In a non-limiting example, the first output shaft speed is greater than the second output shaft speed.

The controller 88 determines a second engine condition, at 212. Specifically, the controller 88 receives and subsequently uses the second output shaft speed to determine the second engine condition, at 212. The second engine condition can include a single output shaft speed, an output shaft speed change such as a speed increase or a speed decrease, a specific output shaft speed rate of change, or any combination thereof.

The controller 88 compares the second engine condition with at least a second output shaft speed threshold, at 214. For example, the second engine condition is a single output shaft speed and the second output shaft speed threshold is a range of output shaft speeds.

If it is determined, via the comparing at 214, that the second engine condition satisfies the second output shaft speed threshold, the controller 88 actuates the second clutch 72, at 216. That is, the second clutch 72 engages to couple the electric machine 44 and the turbine member 38 to the output shaft 78. For example, the second output shaft speed threshold can be within 5% of the first speed of the electric machine drive shaft 45. That is, the controller 88 can actuate the second clutch 72 to couple the electric machine 44 and the turbine member 38 to the output shaft 78 when the speed of the output shaft 78 (e.g. second engine condition) is within 5% of the first speed of the electric machine drive shaft 45. Once the output shaft 78 is engaged to the electric machine 44, the electric machine 44 rotates the output shaft at a predetermined speed.

It will be appreciated that the method 200 can be performed automatically through use of the controller 88 (FIG. 3). The controller can automatically sense by way of an optional sensor 93, the first output shaft speed, at 202. The controller 88 can automatically determine by way of the memory 89 (FIG. 3) the second first condition, at 204.

The controller 88 can automatically compare the first engine condition to a first output shaft speed threshold. Put another way, the controller 88, through use of the memory 89, can determine if the first engine condition satisfies the output shaft speed threshold, at 206.

The controller 88 can automatically selectively actuate or otherwise operate the first clutch 50, at 208, to transfer torque from the electric machine drive shaft 45 to the turbine shaft 40. Specifically, the processor 87 of the controller 88 can send a command to the first clutch 50 to close or otherwise engage when the first engine condition satisfies the first output shaft speed threshold, in order to enable the coupling between the electric machine 44 and the turbine shaft 40, at 208. Put another way, if the first engine condition is within the first output shaft speed threshold, the gas turbine engine 14 is coasting down. From there, the processor 87 of the controller 88 can send a command to the first clutch 50 to engage. The processor 87 can send a command to the electric machine 44 to operate, causing the electric machine drive shaft 45 and the turbine shaft 40 to rotate at the first speed, at 208.

The controller can automatically sense by way of the optional sensor 93, the second output shaft speed, at 210. The controller 88 can automatically determine by way of the memory 89 (FIG. 3) the second engine condition, at 212. The controller 88 can automatically compare the second engine condition to the second output shaft speed threshold. Put another way, the controller 88, through use of the memory 89, can determine if the second engine condition satisfies the second output shaft speed threshold, at 214. It is contemplated that the second clutch 72 can slip until the second engine condition satisfies the second output shaft speed threshold. Once the second engine condition satisfies the second output shaft speed the second clutch 72 automatically engages.

The controller 88 can automatically selectively couple the HTS 10 to the gas turbine engine 14, at 216, through an automatic selective operation of the second clutch 72. Operating the second clutch 72 can include, but is not limited to, the controller 88 sending an instruction to the sprag 90 within the sprag section 82 to pivot at the pivot point 92 from the first position (FIG. 4) to the second position (FIG. 5). Once in the second position, the sprag 90 couples the inner hub 80 to the outer hub 84. That is, the turbine shaft 40 coupled to the inner hub 80 is coupled to the outer hub 84. The outer hub 84 is coupled to the output shaft 78. The electric machine 44 continues the coast down phase by rotating the output shaft 78 at the predetermined speed. By catching the gas turbine engine 14 with the first and second clutch 50, 72 the coast down time of the coast down phase is reduced. By way of a non-limiting example, the electric machine 44 can also be operated in inertia mode to ease the impact torque due to sudden engagement of the second clutch 72 with load of the gas turbine engine 14.That is, when the electric machine 44 is operated in inertia mode, power is not supplied to the electric machine 44 and the electric machine drive shaft 45 coasts freely, reducing the impact torque applied to the electric machine 44 when the second clutch 72 engages.

It will be understood that the method 200 is flexible. For example, the sequence of steps depicted is for illustrative purposes only, and is not meant to limit the method 100 in any way, as it is understood that the steps can proceed in a different logical order or additional or intervening steps can be included without detracting from embodiments of the invention. As a non-limiting example, at least a portion of the method 200 can occur in tandem with or offset from one another.

Benefits associated with aspects of the disclosure herein include a hybrid turbine starter with a second clutch, the second clutch applies drag force to the output shaft of the gas turbine engine to reduce the coast down time of the gas turbine engine. Similarly, by coupling the output shaft to the electric machine, the gas turbine engine no longer needs to coast down to a speed of zero. This allows start up time of the gas turbine engine to be reduced.

Additionally, by not allowing the gas turbine engine to coast down to a speed of zero, the size of the electric machine can be reduced as less torque is required for starting the gas turbine engine. Reducing the size of the electric machine provides a weight benefit.

Further aspects of the invention are provided by the subject matter of the following clauses:

A system comprising: an air turbine starter for an engine including: a housing defining an interior and a primary air flow path; a turbine located within the interior and having a turbine drive shaft, and a plurality of blades, coupled to the turbine drive shaft and located within the primary air flow path; an electric machine having an electric machine drive shaft; a first clutch selectively coupling the turbine drive shaft to the electric machine shaft; an output shaft selectively operably coupled to the engine, to rotate a portion of the engine; and a second clutch within the interior and selectively coupling the turbine drive shaft to the output shaft; a controller in communication with the electric machine, the first clutch, and the second clutch, the controller configured to: operably couple, by the first clutch, the turbine drive shaft to the electric machine drive; operably couple, by the second clutch, the turbine drive shaft to the output shaft.

The system of any preceding clause, wherein the controller is configured to control electrical power to the electric machine.

The system of any preceding clause, wherein the second clutch is a sprag clutch.

The system of any preceding clause, wherein the sprag clutch has an inner hub coupled to the turbine shaft and an outer hub coupled to the output shaft.

The system of any preceding clause, the sprag clutch including sprags located between the inner hub and outer hub, the sprags configured to selectively couple the inner hub and the outer hub.

The system of any preceding clause, wherein the controller is configured to operatively engage the first clutch at a first output shaft speed.

The system of any preceding clause, wherein the controller is configured to operatively engage the second clutch at a second output shaft speed.

The system of any preceding clause, wherein the first output shaft speed is greater than the second output shaft speed.

The system of any preceding clause, wherein the rotatable turbine shaft and the electric machine drive shaft are axially spaced.

The system of any preceding clause, wherein the rotatable turbine shaft and the output shaft are axially spaced.

A method for operating a gas turbine engine having an air turbine starter (ATS) during a coast down phase of the gas turbine engine, the method comprising: operating an electric machine at a first speed prior to a first output speed of the gas turbine engine reaching the first speed during the coast down phase; and coupling the electric machine to the air turbine starter and coupling the air turbine starter to the gas turbine engine when the first output speed satisfies the first speed, whereby the gas turbine engine is rotated by the electric machine.

The method of any preceding clause, further comprising a first clutch, a second clutch, and a controller, wherein operating the gas turbine engine includes the controller operating the first clutch and the second clutch to engage.

The method of any preceding clause, the gas turbine engine having a system comprising a controller, an air turbine starter including a housing defining an interior, an electric machine located at the interior of the housing having an electric machine drive shaft, a turbine, a turbine drive shaft, a first clutch, a second clutch, and an output shaft, the method comprising: sensing at least a first output shaft speed; determining, at the controller, a first engine condition based on the first output shaft speed; comparing, at the controller, the first engine condition with at least a first output speed threshold; and actuate the first clutch based on the comparing.

The method of any preceding clause, wherein the first output shaft speed is faster than the second output speed.

The method of any preceding clause, wherein the first engine condition is indicative of the gas turbine engine in a coast down phase.

The method of any preceding clause, wherein the first engine condition comprises an output shaft speed or a change of speed of the output shaft.

The method of any preceding clause, further comprising: sensing at least a second output shaft speed; determining, at the controller, a second engine condition based on the second output shaft speed; comparing, at the controller, the second engine condition with at least a second output speed threshold; actuate the second clutch based on the comparing

The method of any preceding clause, wherein the first engine condition, the second engine condition, or the first and second engine conditions comprises an output shaft speed or a change of speed of the output shaft.

The method of any preceding clause, wherein the at least one output speed threshold is in a range of 350 revolutions per minute to 470 revolutions per minute.

The method of any preceding clause, wherein the electric machine, the first clutch, the turbine, the second clutch, and the output shaft are axially aligned.

The method of any preceding clause, wherein the first clutch is located axially between the electric machine and the turbine.

The method of any preceding clause, wherein the second clutch is located axially between the turbine and the output shaft.

The method of any preceding clause, wherein the first clutch is different than the second clutch.

The method of any preceding clause wherein the second clutch is an electromagnetic clutch.

The method of any preceding clause wherein the controller provides power to a portion of the second clutch which engages the turbine shaft to the output shaft.

The method of any preceding clause, wherein the sprag includes a first end and a second end, the first end confronts the inner hub and the second end confronts the outer hub.

A gas turbine engine comprising: a compressor section, a combustion section, and a turbine section in serial flow arrangement, and a system comprising: an air turbine starter for an engine including: a housing defining an interior and a primary air flow path; a turbine located within the interior and having a rotatable turbine drive shaft, and a plurality of blades, coupled to the turbine drive shaft and located within the primary air flow path; an electric machine having an electric machine drive shaft; a first clutch selectively coupling the turbine drive shaft to the electric machine shaft; an output shaft selectively operably coupled to the engine, to rotate a portion of the engine; and a second clutch within the interior and selectively coupling the turbine drive shaft to the output shaft; a controller in communication with the electric machine, the first clutch, and the second clutch, the controller configured to: operably couple, by the first clutch, the turbine drive shaft to the electric machine drive; operably couple, by the second clutch, the turbine drive shaft to the output shaft.

The gas turbine engine of any preceding clause, wherein the controller is configured to control electrical power to the electric machine.

The gas turbine engine of any preceding clause, wherein the second clutch is a sprag clutch.

The gas turbine engine of any preceding clause, wherein the sprag clutch has an inner hub coupled to the turbine shaft and an outer hub coupled to the output shaft.

The gas turbine engine of any preceding clause, the sprag clutch including a plurality of sprags located between the inner hub and outer hub, the plurality of sprags configured to selectively couple the inner hub and the outer hub.

The gas turbine engine of any preceding clause, wherein the controller is configured to operatively engage the first clutch at a first output shaft speed.

The gas turbine engine of any preceding clause, wherein the controller is configured to operatively engage the second clutch at a second output shaft speed.

The gas turbine engine of any preceding clause, wherein the first output shaft speed is greater than the second output shaft speed.

The gas turbine engine of any preceding clause wherein the rotatable turbine shaft and the electric machine drive shaft are axially spaced.

The gas turbine engine of any preceding clause, wherein the rotatable turbine shaft and the output shaft are axially spaced.

The gas turbine engine of any preceding clause, wherein the electric machine, the first clutch, the turbine, the second clutch, and the output shaft are axially aligned.

The gas turbine engine of any preceding clause, wherein the first clutch is located axially between the electric machine and the turbine.

The gas turbine engine of any preceding clause, wherein the second clutch is located axially between the turbine and the output shaft.

The gas turbine engine of any preceding clause, wherein the first clutch is different than the second clutch.

The gas turbine engine of any preceding clause wherein the second clutch is an electromagnetic clutch.

The gas turbine engine of any preceding clause wherein the controller provides power to a portion of the electromagnetic clutch which engages the turbine shaft to the output shaft.

The gas turbine engine of any preceding clause, wherein the sprag includes a first end and a second end, the first end confronts the inner hub and the second end confronts the outer hub.

A system comprising: a hybrid turbine starter (HTS) for a gas turbine engine, the HTS including: a housing defining an interior and a primary air flow path; a turbine member located within the interior and having a turbine shaft, and a plurality of blades, coupled to the turbine shaft and located within the primary air flow path; an electric machine having an electric machine drive shaft; a first clutch selectively coupling the turbine shaft to the electric machine drive shaft; an output shaft selectively operably coupled to the gas turbine engine, to rotate a portion of the gas turbine engine; a second clutch provided within the interior and selectively coupling the turbine shaft to the output shaft; and a controller in communication with the electric machine, the first clutch, and the second clutch, the controller configured to: operably couple, by the first clutch, the turbine shaft to the electric machine drive shaft; and operably couple, by the second clutch, the turbine shaft to the output shaft.

The system of any preceding clause, wherein the controller is configured to control electrical power to the electric machine.

The system of any preceding clause, wherein the second clutch is a sprag clutch.

The system of any preceding clause, wherein the sprag clutch has an inner hub coupled to the turbine shaft and an outer hub coupled to the output shaft.

The system of any preceding clause, the sprag clutch including sprags located between the inner hub and the outer hub, the sprags configured to selectively couple the inner hub and the outer hub.

The system of any preceding clause, wherein the controller is configured to operatively engage the first clutch at a first output shaft speed.

The system of any preceding clause, wherein the controller is configured to operatively engage the second clutch at a second output shaft speed.

The system of any preceding clause, wherein the first output shaft speed is greater than the second output shaft speed.

The system of any preceding clause, wherein the turbine shaft and the electric machine drive shaft are axially spaced.

The system of any preceding clause, wherein the turbine shaft and the output shaft are axially spaced.

A method for operating a gas turbine engine having a hybrid turbine starter (HTS) during a coast down phase of the gas turbine engine, the method comprising: operating an electric machine at a first speed prior to a first output shaft speed of the gas turbine engine reaching the first speed during the coast down phase; and coupling the electric machine to the hybrid turbine starter and coupling the hybrid turbine starter to the gas turbine engine when the first output shaft speed satisfies the first speed, whereby the gas turbine engine is rotated by the electric machine.

The method of any preceding clause, further comprising a first clutch, a second clutch, and a controller, wherein operating the gas turbine engine includes the controller operating the first clutch and the second clutch to engage.

A method for operating a gas turbine engine, the gas turbine engine having a system comprising a controller, a hybrid turbine starter (HTS) including a housing defining an interior, an electric machine located at the interior of the housing having an electric machine drive shaft, a turbine, a turbine shaft, a first clutch, a second clutch, and an output shaft, the method comprising: sensing at least a first output shaft speed; determining, via the controller, a first engine condition based on the first output shaft speed; comparing, via the controller, the first engine condition with at least a first output shaft speed threshold; and, if the first engine condition satisfies the first output shaft speed threshold, actuating, via the controller, the first clutch.

The method of any preceding clause, wherein the first output shaft speed is greater than the second output shaft speed.

The method of any preceding clause, wherein the first engine condition is indicative of the gas turbine engine in a coast down phase.

The method of any preceding clause, wherein the first engine condition comprises an output shaft speed or a change of speed of the output shaft.

The method of any preceding clause, further comprising: sensing at least a second output shaft speed; determining, via the controller, a second engine condition based on the second output shaft speed; comparing, at the controller, the second engine condition with at least a second output shaft speed threshold; if the second engine condition satisfies the second output shaft speed threshold, actuating, via the controller, the second clutch.

The method of any preceding clause, wherein the first engine condition, the second engine condition, or the first and second engine conditions comprises an output shaft speed or a change of speed of the output shaft.

The method of any preceding clause, wherein the first output shaft speed threshold is in a range of 350 to 470 revolutions per minute.

The method of any preceding clause, wherein the second clutch is a sprag clutch.

## Claims

1. A system (86) comprising:
a hybrid turbine starter (10) (HTS) for a turbine engine (14), the HTS (10) including:
a housing (30) defining an interior (31) and a primary air flow path (36);
a turbine member (38) located within the interior (31) and having a turbine shaft (40), and a plurality of blades (39), coupled to the turbine shaft (40) and located within the primary air flow path (36);
an electric machine (44) having an electric machine drive shaft (45);
a first clutch (50) selectively coupling the turbine shaft (40) to the electric machine drive shaft (45);
an output shaft (78) selectively operably coupled to the turbine engine (14), to rotate a portion of the turbine engine (14); and
a second clutch (72) provided within the interior (31) and selectively coupling the turbine shaft (40) to the output shaft (78); and
a controller (88) in communication with the electric machine (44), the first clutch (50), and the second clutch (72), the controller (88) configured to:
operably couple, by the first clutch (50), the turbine shaft (40) to the electric machine drive shaft (45);
operably couple, by the second clutch (72), the turbine shaft (40) to the output shaft (78).

2. The system (86) of claim 1, wherein the controller (88) is configured to control electrical power to the electric machine (44).

3. The system (86) of any of claims 1-2, wherein the second clutch (50, 72) is a sprag (90) clutch.

4. The system (86) of claim 3, wherein the sprag (90) clutch has an inner hub (80) coupled to the turbine shaft (40) and an outer hub (80, 84) coupled to the output shaft (78).

5. The system (86) of claim 4, the sprag (90) clutch including sprags (90) located between the inner hub (80) and outer hub (80, 84), the sprags (90) configured to selectively couple the inner hub (80) and the outer hub (80, 84).

6. The system (86) of any of claims 1-5, wherein the controller (88) is configured to operatively engage the first clutch (50) at a first output shaft (78) speed.

7. The system (86) of claim 6, wherein the controller (88) is configured to operatively engage the second clutch (50, 72) at a second output shaft (78) speed.

8. The system (86) of claim 7, wherein the first output shaft (78) speed is greater than the second output shaft (78) speed.

9. The system (86) of any of claims 1-8, wherein the turbine shaft (40) and the electric machine (44) drive shaft (76) are axially spaced.

10. The system (86) of any of claims 1-9, wherein the turbine shaft (40) and the output shaft (78) are axially spaced.

11. The system (86) of any of claims 1-10, further comprising a method (100) for operating a turbine engine (14) having a hybrid turbine starter (10) (HTS (10)) during a coast down phase of the turbine engine (14), the method (100, 200) comprising:
operating an electric machine (44) at a first speed prior to a first output shaft (78) speed of the turbine engine (14) reaching the first speed during the coast down phase; and
coupling the electric machine (44) to the hybrid turbine starter (10) and coupling the air turbine starter to the turbine engine (14) when the first output shaft (78) speed satisfies the first speed, whereby the turbine engine (14) is rotated by the electric machine (44).

12. The system (86) of claim 11, further comprising a first clutch (50), a second clutch (50, 72), and a controller (88), wherein operating the turbine engine (14) includes the controller (88) operating the first clutch (50) and the second clutch (50, 72) to engage.

13. The system (86) of any of claims 1-12, further comprising a method (200) for operating a turbine engine (14), the turbine engine (14) having a system (86) comprising a controller (88), a hybrid turbine starter (10) (HTS (10)) including a housing (30) defining an interior (31), an electric machine (44) located at the interior (31) of the housing (30) having an electric machine (44) drive shaft (76), a turbine, a turbine shaft (40), a first clutch (50), a second clutch (50, 72), and an output shaft (78), the method (100, 200) comprising:
sensing at least a first output shaft (78) speed;
determining, via the controller (88), a first engine condition based on the first output shaft (78) speed;
comparing, via the controller (88), the first engine condition with at least a first output shaft (78) speed threshold; and
if the first engine condition satisfies the first output shaft (78) speed threshold, actuating, via the controller (88), the first clutch (50).

14. The system (86) of any of claims 1-13, wherein the first output shaft (78) speed is greater than the second output shaft (78) speed.

15. The system (86) of any of claims 1-14, wherein the first engine condition is indicative of the turbine engine (14) in a coast down phase.
